(19) Europäisches Patentamt
European Patent Office
Office européen des brevets

(11) **EP 2 001 136 B1**

(12) **EUROPEAN PATENT SPECIFICATION**

(45) Date of publication and mention
of the grant of the patent:
**23.03.2011 Bulletin 2011/12**

(51) Int Cl.:
*H04B 1/10* (2006.01)   *H04B 3/11* (2006.01)
*H04B 3/32* (2006.01)

(21) Application number: **07702023.8**

(22) Date of filing: **10.01.2007**

(86) International application number:
**PCT/CN2007/000091**

(87) International publication number:
**WO 2007/109945 (04.10.2007 Gazette 2007/40)**

(54) **A METHOD AND DEVICE FOR REDUCING SURROUNDING COUPLED NOISE**

VERFAHREN UND EINRICHTUNG ZUR VERRINGERUNG VON UMGEBENDEN GEKOPPELTEN GERÄUSCHEN

PROCÉDÉ ET DISPOSITIF PERMETTANT DE RÉDUIRE LE BRUIT COUPLÉ ENVIRONNANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.03.2006   CN 200610066806**

(43) Date of publication of application:
**10.12.2008   Bulletin 2008/50**

(73) Proprietor: **Huawei Technologies Co., Ltd.**
**Longgang District, Shenzhen**
**Guangdong 518129 (CN)**

(72) Inventor: **SHI, Qingquan**
**Shenzhen, Guangdong 518129 (CN)**

(74) Representative: **Hengelhaupt, Jürgen et al**
**Gulde Hengelhaupt Ziebig & Schneider**
**Patentanwälte - Rechtsanwälte**
**Wallstrasse 58/59**
**10179 Berlin (DE)**

(56) References cited:
**WO-A1-2005/099104        CN-A- 1 482 596**
**JP-A- 2002 064 389        US-A1- 2004 090 927**
**US-A1- 2006 039 454**

## Description

### Technical field

The present embodiments relates to the field of communication technologies, and in particular to a method and device for reducing surrounding coupling noise.

### Background

Digital Subscriber Line (DSL) technology is a high speed transmission technology for transmitting data by using a twisted-pair lines for telephone, such as Unshielded Twist Pair (UTP), which includes Asymmetrical Digital Subscriber Line (ADSL), Very-high-bit-rate Digital Subscriber Line (VDSL), Integrated Services Digital Network (ISDN) based ISDN Digital Subscriber Line (IDSL) and Single-pair High-bit-rate Digital Subscriber Line (SHDSL), etc.

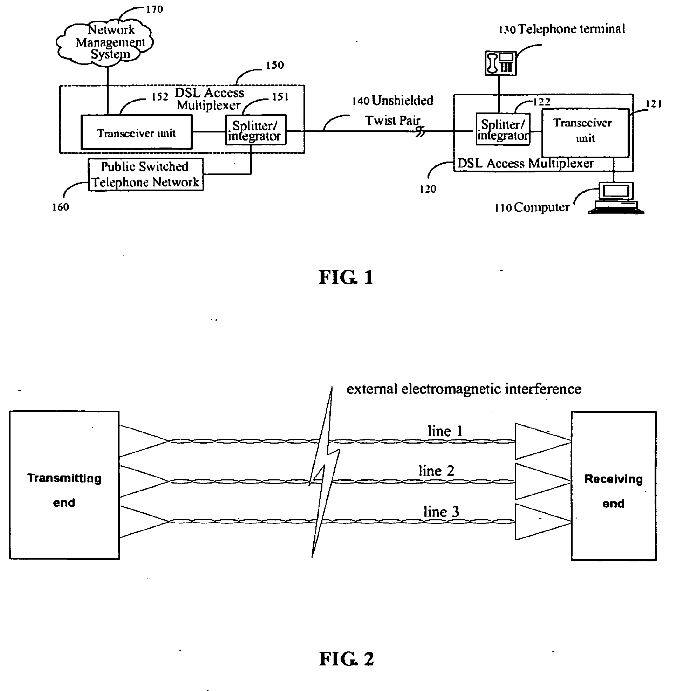

In various Digital Subscriber Line (xDSL) technologies, in addition to the DSL using baseband transmission, such as IDSL and SHDSL, the DSL using pass-band transmission allows the DSL and Plain Old Telephone Service (POTS) to coexist on the same twisted-pair lines by using frequency division multiplexing technology, where the DSL occupies the high freq uency band and the POTS occupies the baseband part under 4KHz, and a POTS signal and a DSL signal are split or merged through a splitter/integrator. The xDSL using pass-band transmission conducts modulation and demodulation by using Discrete Multi-Tone Modulation (DMT) technology. A system providing for a multiplexing DSL access is called a DSL Access Multiplexer (DSLAM), a schematic diagram of whose system connection relation is shown in Figure 1. A DSLAM 120 includes transceiver unit 121 and a splitter/integrator 122. In an uplink direction, the transceiver unit 121 receives a DSL signal from a computer 110, amplifies the received signal and transmits the amplified DSL signal to the splitter/integrator 122. The splitter/integrator 122 integrates the DSL signal from the transceiver unit 121 and a POTS signal from a telephone terminal 130. The integrated signal is received by a splitter/integrator 151 in a DSLAM 150 of a partner terminal through the transmission of a multiplexing UTP 140. The splitter/integrator 151 splits the received signals in which the POTS signal is transmitted to a Public Switched Telephone Network (PSTN) 160 and the DSL signal is transmitted to a transceiver unit 152 of the DSLAM 150. The transceiver unit 152 subsequently amplifies the received signal and transmits it to a Network Management System (NMS) 170. In a downlink direction of the signal, the signal is transmitted in an order reverse to the above.

In the xDSL technology, a UTP is used as a transmission channel, and its non-distortion channel capacity must satisfy Shannon's channel capacity formula:

$$C = B \times \log_2\left(1 + \frac{S}{N}\right) \qquad\qquad (1)$$

where, C is a channel capacity, B is a signal bandwidth, S is a signal, and N is a noise. In order to be able to achieve a higher speed transmission, the channel capacity C is required to be increased as far as possible. It can be seen from formula (1) that the transmission capacity C of the channel can be increased by enhancing the signal bandwidth B or the signal S. However, the signal bandwidth B is determined by the amplitude frequency characteristics of the channel and the signal S is defined by conditions such as a device and frequency spectrum compatibility. Therefore, both of them are limited to a certain range, and the range for enhancing the transmission capacity C of the xDSL that can be obtained through the above approach is restricted. However, from the point of view of the noise N, as long as the noise N is lowered, the channel capacity C of a line can also be enhanced.

Noises received by the receiving end of a transmission channel include such several main parts as a line thermal noise, an amplifier thermal noise, a surrounding electromagnetic coupling noise. The former two are also called background thermal noises. The energy of the background thermal noises is comparatively small, which is generally about-140 $dBm$ / $Hz$. The surrounding electromagnetic coupling noise is a line noise caused by electromagnetic interference in the external environment. Usually, the surrounding electromagnetic coupling noise is much greater than the background thermal noises. Therefore, the control of the energy of noises is mainly the control of the energy of the surrounding electromagnetic coupling noise. In a noise pattern, the surrounding electromagnetic coupling noises mainly include an impulsive noise, a periodic noise and a continuous noise. An impulsive noise, such as the noise caused by a thunderbolt or a great surge current in a power line, has a very short duration. A periodic noise, such as the noise caused by periodic pulse interference, has a long duration and its change rule has certain periodicity. A continuous noise, such as the noise caused by a current transmitted in a power line, has a long duration and its change does not observe a regular rule.

Theoretically, if electromagnetic shielding is applied to the transmission line, the surrounding electromagnetic coupling noise can be reduced or even eliminated radically A currently feasible method is to adopt Shielded Twist Pair (STP) as a line bearing the xDSL instead of the UTP However, because the outer layer of the STP is coated with a metal foil so that the cost of the STP is much higher than that of the UTP and the installation is much more difficult, and this method is not adopted except in a very few applications. In the processing of the prior art, the negative influence generated by the impulsive noise is generally reduced through interleaving, trellis encoding, etc, and the influence of the noise energy of the periodic noise or continuous noise on the channel capacity can be reduced only by way of Signal to Noise Ratio (SNR) margin. The method of the SNR margin has a disadvantage that the network transmission rate is also reduced while the influence of the periodic noise or continuous noise on the channel capacity is reduced.

US 2006/039454 A1 discloses an interference cancellation system and relates to the use of a functional antenna to reduce the deleterious effects of RF interference, including AM radio noise, on received data signals.

US 2004/090927 A1 discloses a method, apparatus and system for noise cancellation in a multi-channel communication system by canceling FEXT on a victim channel utilizing the signals received on the other channels.

**Summary**

One embodiment provides a method for reducing a surrounding coupling noise, which can effectively reduce the influence of a surrounding electromagnetic coupling noise on channel capacity without affecting the transmission rate of the channel. The method includes:

obtaining, by a weight coefficient processing unit, a reference noise signal, determining a weight coefficient for adjusting the reference noise signal, filtering the received reference noise signal with a transfer function configured by the weight coefficient, and inputting the filtered signal into an adder;

receiving , by the adder, a signal from a receiving end of a line to be processed, linearly superposing the received signal from the receiving end of the line to be processed with the filtered signal from the weight coefficient processing unit, transmitting the superposed signal to the weight coefficient processing unit and outputting the superposed signal as an output signal of the device the adder belongs to.

Specifically, the obtaining of the reference noise signal by the weight coefficient processing unit comprises: demodulating a signal received by a receiving end of a reference line to obtain a signal of a transmitting end of the reference line; and using a signal as the reference noise signal, wherein the signal that is used is obtained by subtracting a product of the signal of the transmitting end and a transfer function of the reference line from the signal received by the receiving end of the reference line..

Another embodiment provides a device for reducing a surrounding coupling noise. The device includes: a weight coefficient processing unit configured to receive a reference noise signal, obtain a weight coefficient according to a signal from an adder, filter the received reference noise signal with a transfer function configured by the weight coefficient, and input the filtered signal into the adder.

The adder is adapted to receive a signal from a receiving end of a line to be processed, superpose the received signal from the receiving end of the line to be processed with the filtered signal from the weight coefficient processing unit, transmit the superposed signal to the weight coefficient processing unit and output the superposed signal out as an output signal of the device.

Specially, the device further comprises:

a reference noise signal processing unit for receiving a signal of a receiving end of a reference line, generating the reference noise signal based on the received signal of the receiving end of the reference line, and outputting the generated reference noise signal to the weight coefficient processing unit,

wherein the reference noise signal processing unit further comprises:

a demodulation unit for receiving the signal of the receiving end of the reference line, demodulating the received signal to obtain a signal transmitted by a transmitting end of the reference line and outputting the obtained signal of the transmitting end to a filtering unit;

the filtering unit configured for filtering the signal from the demodulation unit according to a transfer function of the reference line obtained in advance and outputting the filtered signal to a subtraction unit; and

the subtraction unit configured for subtracting the signal from the filtering unit from the signal received by the receiving end of the reference line; and outputting the signal obtained by the subtraction to the weight coefficient processing unit as the reference noise signal.

The method and the device of the embodiments can reduce the surrounding coupling noise of a line to be processed by using a correlation between surrounding noises of respective lines and using the noise signal of the reference line as the reference noise signal to cancel the noise signal of the line to be processed, so as to enhance the channel capacity of the line. The technical solutions of the embodiments are applicable to an impulsive, a periodic or a continuous surrounding coupling noise.

**Brief Descriptions of the Drawings**

Figure 1 is a schematic diagram of the connection relation of an xDSL system;
Figure 2 is a schematic diagram showing that three lines are simultaneously influenced by an external electromagnetic interference;
Figure 3 is a schematic diagram of a device according to one embodiment; and
Figure 4 is a flowchart illustrating a method according to one embodiment.

**Detailed Descriptions of the Embodiments**

An electromagnetic interference from the external environment always influences a plurality of lines simultaneously, and a prominent characteristic of the surrounding electromagnetic coupling noise is that a plurality of lines are simultaneously influenced and the surrounding electromagnetic coupling noises of respective lines have a certain correlation. Therefore, theoretically, by using the correlation, the influences of the surrounding electromagnetic coupling noises on the plurality of lines can be cancelled with each other by a certain processing method, which in effect is equivalent to the reduction of the surrounding electromagnetic coupling noises.
Figure 2 is a schematic diagram showing that three lines are simultaneously influenced by an external electromagnetic interference. The pattern of the external surrounding electromagnetic interference can be impulsive, periodic or continuous, or an arbitrary superposition of the above three patterns. The noise signal is represented by $N_s$. Signals transmitted by a transmitting end of line 1, line 2 and line 3 are represented by $X_1$, $X_2$ and $X_3$, respectively. The receiving signals $Y_1$, $Y_2$ and $Y_3$ received by a receiving end are:

$$Y_1 = H^1 \times X_1 + H^{w1} \times N_s + \sigma_1 \qquad (2)$$

$$Y_2 = H^2 \times X_2 + H^{w2} \times N_s + \sigma_2 \qquad (3)$$

$$Y_3 = H^3 \times X_3 + H^{w3} \times N_s + \sigma_3 \qquad (4)$$

where, $H^1$, $H^2$ and $H^3$ are transfer functions of the three lines, $H^{w1}$, $H^{w2}$ and $H^{w3}$ are coupling functions of the surrounding noises of the three lines, and $\sigma_1$, $\sigma_2$ and $\sigma_3$ are background thermal noise signals of the three lines, respectively.
One embodiment provides a method for reducing surrounding coupling noise, which mainly includes.
Act 1: the reference noise signal of the external electromagnetic interference is determined.
In this embodiment, Line 1 is used as a reference line, and a total noise signal $N_t$ of line 1 is obtained. The noise signal is used as the reference noise signal $N_r$ :

$$N_r = N_1 = H^{w1} \times N_s + \sigma_1 \qquad (5)$$

The reference noise signal includes the background thermal noise $\sigma_1$ and the surrounding electromagnetic coupled noise $H^{w1} \times N_s$. The total noise signal $N_1$ of line 1 can be obtained by using the following two methods.
Method 1: The transmitting end of line 1 does not transmit a service signal, and then the signal received by the receiving end of line I is the noise signal $N_1$ of line 1.
Method 2: signal $X_1$ transmitted through line 1 is obtained by demodulation processing, while $H^1$ can be obtained through a parameter reported by a transceiver and thus can be used as a known parameter. The total noise signal $N_1$

of line 1 can be obtained by subtracting $H^1 \times X_1$ from the received signal $Y_1$.

Act 2: an opposite number $\eta_i$ of a ratio of the surrounding noise coupling function of another line and that of the reference line is determined, where i represents the number of the line. For example, the opposite number $\eta_2$ of the ratio of the surrounding noise coupling function of line 2 and that of the reference line is:

$$\eta_2 = -H^{w2}/H^{w1} \qquad\qquad (6)$$

Generally, the surrounding noise coupling functions of the respective lines approximate each other, thus $\eta_1 \approx -1$.

Act 3: the external surrounding electromagnetic coupling noise of another line is cancelled with the reference noise signal.

The execution process is as follows. The reference noise signal $N_r$ is multiplied by $\eta_i$, the obtained result is superposed with a signal $Y_1$ received by the receiving end of another line, and the superposed signal $Y_i'$ is used as the signal of the line after cancellation. Still taking line 2 as an example, the signal of line 2 after counteraction is represented by $Y_2'$, then

$$\begin{aligned}
Y_2' &= Y_2 + \eta_2 \times N_r \\
&= H^2 \times X_2 + H^{w2} \times N_s + \sigma_2 - \frac{H^{w2}}{H^{w1}} \times \left(H^{w1} \times N_s + \sigma_1\right) \\
&= H^2 \times X_2 + \left(\sigma_2 - \frac{H^{w2}}{H^{w1}} \times \sigma_1\right) \qquad\qquad (7)
\end{aligned}$$

It can be seen from formula (3) and (7) that, before the cancellation, the noise of line 2 is $N_2 = H^{w2} \times N_s + \sigma_2$, while after the cancellation, the noise of line 2 is $N_2' = \sigma_2 - \dfrac{H^{w2}}{H^{w1}} \times \sigma_1$. The magnitude of $N_2'$ is substantially equal to that of the background thermal noise $\sigma_2$. Therefore, through the cancellation, the surrounding coupling noise of line 2 is greatly reduced.

The surrounding coupling noise of line 3 can be canceled by using an approach similar to the above.

What has been described above is a theoretically ideal case. In fact, a surrounding noise coupling function is a function that varies along with a noise source signal $N_s$, and the variation of the noise source signal $N_s$ is usually very complicated and unpredictable, so it is difficult to obtain the exact value of $\eta_i$.

Based on the above reasons, in the device according to one embodiment, $\eta$ is adaptively adjusted by using an adaptive filter so as to achieve the optimal effect of canceling the surrounding coupling noise.

The device according to the embodiment may be located in the DSLAM at the receiving end of a multi-user line, and specifically in the splitter/integrator in the DSLAM.

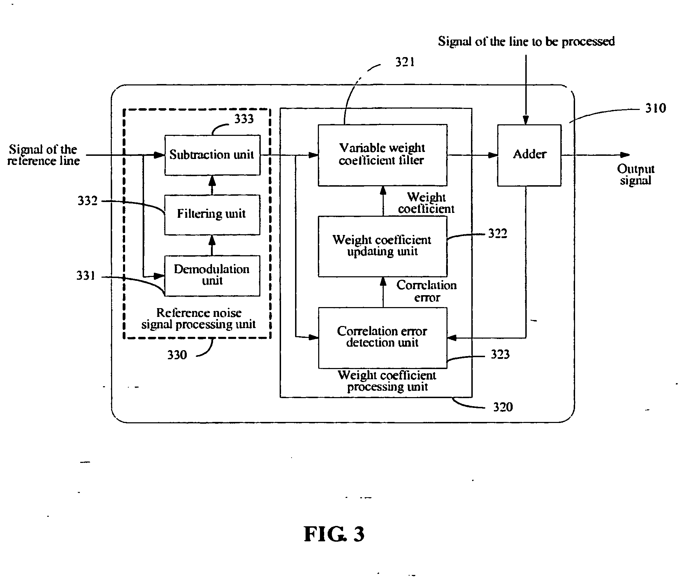

Referring to Fig. 3, the device includes an adder 310 and a weight coefficient processing unit 320. The adder 310 is adapted to receive the signal $Y_i$ from the receiving end of the line to be processed and superpose the received signal of the line with a signal from the weight coefficient processing unit 320. The superposed signal is used as the output signal $Y_i'$ after cancellation and is sent to the weight coefficient processing unit 320.

The weight coefficient processing unit 320 is adapted to receive the reference noise signal $N_r$ from the reference line, i.e. a noise signal of the reference line; calculate to obtain a weight coefficient $\omega_i$ based on the signal $Y_i'$ from the adder 310 and the reference noise signal $N_r$; filter the received reference noise signal with the transfer function configured by the weight coefficient $\omega_i$, which is equivalent to multiplying the weight coefficient $\omega_i$ by respective delay points of the reference noise signal $N_r$ and accumulating the products; and input the filtered signal into the adder 310.

The weight coefficient processing unit 320 may further include a variable weight coefficient filter 321, a weight coefficient updating unit 322 and a correlation error detection unit 323.

The variable weight coefficient filter 321 is adapted to receive the reference noise signal $N_r$ of the reference line and the weight coefficient $\omega_i$ from the weight coefficient updating unit 322, filter the received reference noise signal with the transfer function configured by the weight coefficient $\omega_i$, and input the filtered signal to the adder 310.

The weight coefficient updating unit 322 is adapted to receive a correlation error $\delta_i$ from the correlation error detection unit 323, obtain the weight coefficient $\omega_i$ based on $\delta_i$, and send the obtained $\omega_i$ to the variable weight coefficient

filter 321. The $\omega_i$ is a transfer function of the variable weight coefficient filter 321 and approaches a target value which is an opposite number of the ratio of the noise coupling function $H^{wi}$ of the present line and the noise coupling function $H^{wi}$ of the reference line, i.e. $\omega_i \rightarrow \eta_i = -H^{wi}/H^{w1}$. The algorithm from which the weight coefficient $\omega_i$ is obtained can be a Least Mean Square (LMS) algorithm, Recursive Least square (RLS) algorithm, some other adaptive filtering algorithms or a certain improved algorithm based on these algorithms. The embodiment of the disclosure is not limited to the specific algorithm adopted.

The correlation error detection unit 323 is adapted to receive the reference noise signal $N_r$ of the reference line and the signal $Y_i'$ from the adder 310, calculate the correlation error $\delta_i$ based on the received $N_r$ and $Y_i'$, and input $\delta_i$ into the weight coefficient updating unit 322.

If the reference noise signal is obtained by using above mentioned method 2, a reference noise signal processing unit 330 is needed to receive the signal from the reference line and output the reference noise signal after being processed according to method 2 to the weight coefficient processing unit 320. If the reference noise signal is obtained by using method 1, no such a reference noise signal processing unit is needed.

The reference noise signal processing unit 330 includes a demodulation unit 331, a filtering unit 332 and a subtraction unit 333. The demodulation unit 331 is adapted to receive the signal from the receiving end of the reference line, demodulate the received signal to obtain the signal sent by the transmitting end of the reference line, and output the obtained signal of the transmitting end to the filtering unit 332.

The filtering unit 332 is adapted to filter the signal from the demodulation unit 332 according to the advance-obtained transfer function of the reference line and output the filtered signal to the subtraction unit 333. The transfer function of the reference line can be preset.

The subtraction unit 333 is adapted to subtract the signal from the filtering unit 332 from the signal from the receiving end of the reference line. The signal obtained after the subtraction is output to the weight coefficient processing unit 320 as the reference noise signal.

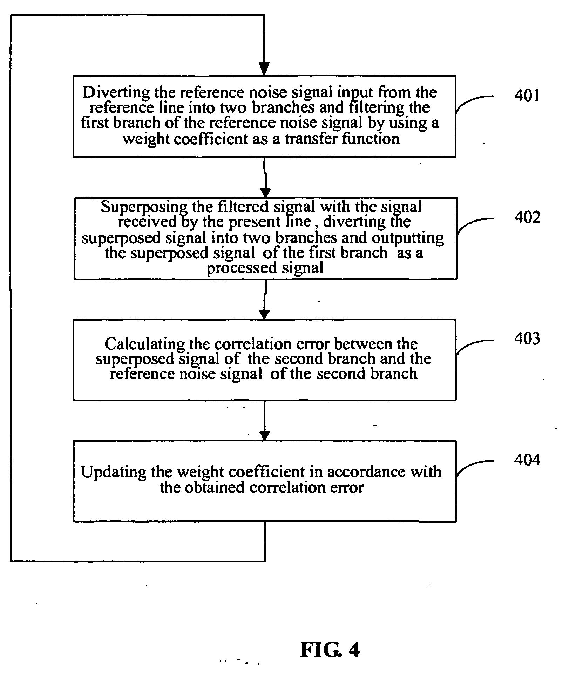

Fig. 4 is a flowchart illustrating a method for canceling coupling noise according to one embodiment. The method includes:

Act 401, the reference noise signal $N_r$ input from the reference line is diverted into two branches, the first branch of the reference noise signal is filtered with the transfer function configured by the weight coefficient $\omega_i$. $N_r$ is the noise signal of the reference line. The initial values of $\omega_i$ can be set according to the method for using an existing adaptive filter, for example, all of them are set to be 0.1.

Act 402, the filtered result $\sum_{i=0}^{n} w_i \times N_r(t-i)$ is superposed with the signal $Y_i$ received by the present line. The superposed signal is diverted into two branches. The first branch of the superposed signal is output as the processed signal $Y_i'$.

Act 403, the correlation error $\delta_i$ between the second branch of the superposed signal and the second branch of the reference noise signal is calculated.

Act 404, the weight coefficient $\omega_i$ is updated according to the obtained correlation error $\delta_i$. The algorithm adopted in this Act can be, but is not limit to LMS, RLS, or an improved algorithm based on these two algorithms.

After performing Act 404, the process returns to and continuously performs step 401.

The above Acts 401 to 404 are a working cycle. The weight coefficient $\omega_i$ used in Act 401 may be the weight coefficient obtained in Act 404 of the previous cycle.

By using this kind of method for adaptively adjusting the weight coefficient, even if the weight coefficient $\omega_i$ is greatly different from its target value $\eta_i$ sometimes, for example, the surrounding noise coupling functions $H^{wi}$ of respective lines vary due to the variation of the external electromagnetic interference while the weight coefficient $\omega_i$ is not adjusted immediately along with it, the weight coefficient, $\omega_i$ can be adaptively converged to the ideal target value $\eta_i$ by using several cycles of the above mentioned Acts 401 to 404, and thus influences of the large part of the surrounding coupling noises on the channel capacity can be substantially eliminated by using the method of canceling the surrounding coupling noise according to the embodiments.

While the above embodiments is applied to a multi-user line of the xDSL system, those skilled in the art should recognize that as long as it is the case where the same device receives and processes signals transmitted from a plurality of lines simultaneously, the embodiments can be applied to reduce the coupling noises. For example, the method of the embodiments can be used to reduce the coupling noises of a plurality of lines accessing to a router device in an Ethernet.

What has been described above are only exemplary embodiments, and are not used to limit the present invention. Any modifications, equivalent alternations and improvements made within the principle of the present invention shall fall into the protection scope of the present invention.

**Claims**

1.  A method for reducing a surrounding coupling noise, comprising:

    obtaining, by a weight coefficient processing unit (320), a reference noise signal, determining a weight coefficient for adjusting the reference noise signal, filtering the received reference noise signal with a transfer function configured by the weight coefficient, and inputting the filtered signal into an adder (310);
    receiving , by the adder (310), a signal from a receiving end of a line to be processed, linearly superposing the received signal from the receiving end of the line to be processed with the filtered signal from the weight coefficient processing unit (320), transmitting the superposed signal to the weight coefficient processing unit (320) and outputting the superposed signal as an output signal of the device the adder belongs to,
    **characterized by** that the obtaining of the reference noise signal by the weight coefficient processing unit (320) comprises: demodulating a signal received by a receiving end of a reference line to obtain a signal of a transmitting end of the reference line; and using a signal as the reference noise signal, wherein the signal that is used is obtained by subtracting a product of the signal of the transmitting end and a transfer function of the reference line from the signal received by the receiving end of the reference line.

2.  The method according to claim 1, wherein after outputting the superposed signal, the method further comprises entering a next working cycle to execute the steps repeatedly.

3.  The method according to claim 2, wherein the determining of the weight coefficient for adjusting the reference noise signal comprises:

    calculating a correlation error between the reference noise signal and the superposed signal obtained in a previous working cycle; and updating the weight coefficient according to the correlation error.

4.  The method according to claim 3, wherein when the determining of the weight coefficient for adjusting the reference noise signal is performed at the first time, an initial value of the weight coefficient is set according to a rule for using an adaptive filter.

5.  A device for reducing a surrounding coupling noise, comprising:

    a weight coefficient processing unit (320) configured to receive a reference noise signal, obtain a weight coefficient according to a signal from an adder (310), filter the received reference noise signal with a transfer function configured by the weight coefficient, and input the filtered signal into the adder; and
    the adder (310) configured to receive a signal from a receiving end of a line to be processed, linearly superpose the received signal from the receiving end of the line to be processed with the filtered signal from the weight coefficient processing unit (320), transmit the superposed signal to the weight coefficient processing unit and output the superposed signal outwards as an output signal of the device,
    **characterized by** that the device further comprises:

    a reference noise signal processing unit (330) for receiving a signal of a receiving end of a reference line, generating the reference noise signal based on the received signal of the receiving end of the reference line, and outputting the generated reference noise signal to the weight coefficient processing unit (320),
    wherein the reference noise signal processing unit (330) further comprises:

    a demodulation unit (331) for receiving the signal of the receiving end of the reference line, demodulating the received signal to obtain a signal transmitted by a transmitting end of the reference line and outputting the obtained signal of the transmitting end to a filtering unit (332);
    the filtering unit (332) configured for filtering the signal from the demodulation unit (331) according to a transfer function of the reference line obtained in advance and outputting the filtered signal to a subtraction unit (333); and
    the subtraction unit (333) configured for subtracting the signal from the filtering unit (332) from the signal received by the receiving end of the reference line; and outputting the signal obtained by the subtraction to the weight coefficient processing unit (320) as the reference noise signal.

6.  The device according to claim 5, wherein the weight coefficient processing unit (320) further comprises:

a correlation error detection unit (323) configured to receive the reference noise signal and the superposed signal from the adder (310), calculate a correlation error between the two signals and transmit the correlation error to a weight coefficient updating unit (322);

the weight coefficient updating unit (322) configured for calculating the weight coefficient according to the received correlation error and outputting the calculated weight coefficient to a variable weight coefficient filter (321); and

the variable weight coefficient filter (321) configured for receiving the reference noise signal, configuring the transfer function by using the weight coefficient from the weight coefficient updating unit (322), filtering the received reference noise signal with the configured transfer function, and outputting the filtered signal to the adder (310).

**Patentansprüche**

1. Verfahren zum Verringern eines umgebenden Koppelrauschens, mit den folgenden Schritten:

   Erhalten eines Referenzrauschsignals durch eine Gewichtskoeffizienten-Verarbeitungseinheit (320), Bestimmen eines Gewichtskoeffizienten zum Einstellen des Referenzrauschsignals, Filtern des empfangenen Referenzrauschsignals mit einer durch den Gewichtskoeffizienten konfigurierten Übertragungsfunktion und Eingeben des gefilterten Signals in einen Addierer (310);
   Empfangen eines Signals durch den Addierer (310) von einem Empfangsende einer zu verarbeitenden Leitung, lineares Überlagern des empfangenen Signals aus dem Empfangsende der zu verarbeitenden Leitung mit dem gefilterten Signal aus der Gewichtskoeffizienten-Verarbeitungseinheit (320), Senden des überlagerten Signals zu der Gewichtskoeffizienten-Verarbeitungseinheit (320) und Ausgeben des überlagerten Signals als ein Ausgangssignal der Einrichtung, zu der der Addierer gehört,
   **dadurch gekennzeichnet, dass** das Erhalten des Referenzrauschsignals durch die Gewichtskoeffizienten-Verarbeitungseinheit (320) Folgendes umfasst: Demodulieren eines durch ein Empfangsende einer Referenzleitung empfangenen Signals, um ein Signal eines sendenden Endes der Referenzleitung zu erhalten; und Verwenden eines Signals als das Referenzrauschsignal, wobei das Signal, das verwendet wird, durch Subtrahieren eines Produkts des Signals des sendenden Endes und einer Übertragungsfunktion der Referenzleitung von dem durch das Empfangsende der Referenzleitung empfangenen Signal erhalten wird.

2. Verfahren nach Anspruch 1, wobei das Verfahren nach dem Ausgeben des überlagerten Signals ferner das Eintreten in einen nächsten Arbeitszyklus umfasst, um die Schritte wiederholt auszuführen.

3. Verfahren nach Anspruch 2, wobei das Bestimmen des Gewichtskoeffizienten zum Einstellen des Referenzrauschsignals Folgendes umfasst:

   Berechnen eines Korrelationsfehlers zwischen dem Referenzrauschsignal und dem in einem vorherigen Arbeitszyklus erhaltenen überlagerten Signal; und Aktualisieren des Gewichtskoeffizienten gemäß dem Korrelationsfehler.

4. Verfahren nach Anspruch 3, wobei, wenn das Bestimmen des Gewichtskoeffizienten zum Einstellen des Referenzrauschsignals zum ersten Mal ausgeführt wird, ein Anfangswert des Gewichtskoeffizienten gemäß einer Regel zur Verwendung eines adaptiven Filters gesetzt wird.

5. Einrichtung zum Verringern eines umgebenden Koppelrauschens, umfassend:

   eine Gewichtskoeffizienten-Verarbeitungseinheit (320), die dafür ausgelegt ist, ein Referenzrauschsignal zu empfangen, einen Gewichtskoeffizienten gemäß einem Signal von einem Addierer (310) zu erhalten, das empfangene Referenzrauschsignal mit einer durch den Gewichtskoeffizienten konfigurierten Übertragungsfunktion zu filtern und das gefilterte Signal in den Addierer einzugeben; und
   den Addierer (310), der dafür ausgelegt ist, ein Signal von einem Empfangsende einer zu verarbeitenden Leitung zu empfangen, das empfangene Signal aus dem Empfangsende der zu verarbeitenden Leitung linear mit dem gefilterten Signal aus der Gewichtskoeffizienten-Verarbeitungseinheit (320) zu überlagern, das überlagerte Signal zu der Gewichtskoeffizienten-Verarbeitungseinheit zu senden und das überlagerte Signal als ein Ausgangssignal der Einrichtung nach außen auszugeben,
   **dadurch gekennzeichnet, dass** die Einrichtung ferner Folgendes umfasst:

eine Referenzrauschsignal-Verarbeitungseinheit (330) zum Empfangen eines Signals eines Empfangsendes einer Referenzleitung, Erzeugen des Referenzrauschsignals auf der Basis des empfangenen Signals des Empfangsendes der Referenzleitung und Ausgeben des erzeugten Referenzrauschsignals an die Gewichtskoeffizienten-Verarbeitungseinheit (320),
wobei die Referenzrauschsignal-Verarbeitungseinheit (330) ferner Folgendes umfasst:

eine Demodulationseinheit (331) zum Empfangen des Signals des Empfangsendes der Referenzleitung, Demodulieren des empfangenen Signals, um ein durch ein sendendes Ende der Referenzleitung gesendetes Signal zu erhalten, und Ausgeben des erhaltenen Signals des sendenden Endes an eine Filterungseinheit (332);
die Filterungseinheit (332), die dafür ausgelegt ist, das Signal von der Demodulationseinheit (331) gemäß einer im Voraus erhaltenen Übertragungsfunktion der Referenzleitung zu filtern und das gefilterte Signal an eine Subtraktionseinheit (333) auszugeben; und
die Subtraktionseinheit (333), die dafür ausgelegt ist, das Signal von der Filterungseinheit (332) von dem durch das Empfangsende der Referenzleitung empfangenen Signal zu subtrahieren; und das durch die Subtraktion erhaltene Signal als das Referenzrauschsignal an die Gewichtskoeffizienten-Verarbeitungseinheit (320) auszugeben.

6. Einrichtung nach Anspruch 5, wobei die Gewichtskoeffizienten-Verarbeitungseinheit (320) ferner Folgendes umfasst:

eine Korrelationsfehler-Detektionseinheit (323), die dafür ausgelegt ist, das Referenzrauschsignal und das überlagerte Signal von dem Addierer (310) zu empfangen,
einen Korrelationsfehler zwischen den beiden Signalen zu berechnen und den Korrelationsfehler zu einer Gewichtskoeffizienten-Aktualisierungseinheit (322) zu senden;
die Gewichtskoeffizienten-Aktualisierungseinheit (322), die dafür ausgelegt ist, den Gewichtskoeffizienten gemäß dem empfangenen Korrelationsfehler zu berechnen und den berechneten Gewichtskoeffizienten an ein Filter (321) mit variablen Gewichtskoeffizienten auszugeben; und
das Filter (321) mit variablen Gewichtskoeffizienten, das dafür ausgelegt ist, das Referenzrauschsignal zu empfangen, die Übertragungsfunktion durch Verwenden des Gewichtskoeffizienten von der Gewichtskoeffizienten-Aktualisierungseinheit (322) zu konfigurieren, das empfangene Referenzrauschsignal mit der konfigurierten Übertragungsfunktion zu filtern und das gefilterte Signal an den Addierer (310) auszugeben.

## Revendications

1. Procédé de réduction d'un bruit de couplage ambiant, comprenant :

l'obtention, par une unité de traitement à coefficient de pondération (320), d'un signal de bruit de référence, la détermination d'un coefficient de pondération pour régler le signal de bruit de référence, le filtrage du signal de bruit de référence reçu avec une fonction de transfert configurée par le coefficient de pondération, et l'entrée du signal filtré dans un additionneur (310) ;
la réception, par l'additionneur (310), depuis une extrémité réceptrice d'une ligne d'un signal à traiter, la superposition linéaire du signal à traiter reçu depuis l'extrémité réceptrice de la ligne avec le signal filtré provenant de l'unité de traitement à coefficient de pondération (320), la transmission du signal superposé à l'unité de traitement à coefficient de pondération (320) et la production en sortie du signal superposé comme signal de sortie du dispositif auquel appartient l'additionneur,
**caractérisé en ce que** l'obtention du signal de bruit de référence par l'unité de traitement à coefficient de pondération (320) comprend : la démodulation d'un signal reçu par une extrémité réceptrice d'une ligne de référence afin d'obtenir un signal d'une extrémité émettrice de la ligne de référence ; et l'utilisation d'un signal, comme signal de bruit de référence, le signal utilisé étant obtenu en soustrayant du signal reçu par l'extrémité réceptrice de la ligne de référence, un produit du signal de l'extrémité émettrice et d'une fonction de transfert de la ligne de référence.

2. Procédé selon la revendication 1, dans lequel après la production en sortie du signal superposé, le procédé comprend en outre l'entrée d'un cycle de travail postérieure pour exécuter les étapes de façon répétée.

3. Procédé selon la revendication 2, dans lequel la détermination du coefficient de pondération pour régler le signal de bruit de référence comprend :

le calcul d'une erreur de corrélation entre le signal de bruit de référence et le signal superposé obtenu dans un cycle de travail antérieur ; et l'actualisation du coefficient de pondération en fonction de l'erreur de corrélation.

4. Procédé selon la revendication 3, dans lequel quand la détermination du coefficient de pondération pour régler le signal de bruit de référence est exécutée pour la première fois, une valeur initiale du coefficient de pondération est établie en fonction d'une règle d'utilisation d'un filtre adaptatif.

5. Dispositif de réduction d'un bruit de couplage ambiant, comprenant :

une unité de traitement à coefficient de pondération (320) configurée pour recevoir un signal de bruit de référence, obtenir un coefficient de pondération en fonction d'un signal provenant d'un additionneur (310), filtrer le signal de bruit de référence reçu avec une fonction de transfert configurée par le coefficient de pondération, et entrer le signal filtré dans l'additionneur ; et

l'additionneur (310) configuré pour recevoir depuis une extrémité réceptrice d'une ligne un signal à traiter, superposer linéairement le signal à traiter reçu depuis l'extrémité réceptrice de la ligne avec le signal filtré provenant de l'unité de traitement à coefficient de pondération (320), transmettre le signal superposé à l'unité de traitement à coefficient de pondération et produire en sortie le signal superposé comme signal de sortie du dispositif,

**caractérisé en ce que** le dispositif comprend en outre :

une unité de traitement à coefficient de pondération (330) pour recevoir un signal d'une extrémité réceptrice d'une ligne de référence, générer le signal de bruit de référence en fonction du signal reçu de l'extrémité réceptrice de la ligne de référence,

et produire en sortie le signal de bruit de référence généré vers l'unité de traitement à coefficient de pondération (320),

dans lequel l'unité de traitement à coefficient de pondération (330) comprend en outre :

une unité de démodulation (331) pour recevoir le signal de l'extrémité réceptrice de la ligne de référence, démoduler le signal reçu afin d'obtenir un signal transmis par une extrémité émettrice de la ligne de référence, et produire en sortie le signal obtenu de l'extrémité émettrice vers une unité de filtrage (332),

l'unité de filtrage (332) configurée pour filtrer le signal provenant de l'unité de démodulation (331) en fonction d'une fonction de transfert de la ligne de référence obtenue à l'avance et produire en sortie le signal filtré vers une unité de soustraction (333) ; et

l'unité de soustraction (333) configurée pour soustraire le signal provenant de l'unité de filtrage (332) du signal reçu par l'extrémité réceptrice de la ligne de référence ; et

produire en sortie le signal obtenu par la soustraction vers l'unité de traitement à coefficient de pondération (320) comme signal de bruit de référence.

6. Dispositif selon la revendication 5, dans lequel l'unité de traitement à coefficient de pondération (320) comprend en outre :

une unité de détection d'erreur de corrélation (332) configurée pour recevoir le signal de bruit de référence et le signal superposé de l'additionneur (310), calculer une erreur de corrélation entre les deux signaux et transmettre l'erreur de corrélation vers une unité d'actualisation de coefficient de pondération (322) ;

l'unité d'actualisation de coefficient de pondération (322) configurée pour calculer le coefficient de pondération en fonction de l'erreur de corrélation reçue et produire en sortie le coefficient de pondération calculé vers un filtre de coefficient de pondération variable (321) ; et

le filtre de coefficient de pondération variable (321) configuré pour recevoir le signal de bruit de référence, configurer la fonction de transfert en utilisant le coefficient de pondération de l'unité d'actualisation de coefficient de pondération (322), filtrer le signal de bruit de référence reçu avec la fonction de transfert configurée et produire en sortie le signal filtré vers l'additionneur (310).

**FIG. 1**

**FIG. 2**

Signal of the line to be processed

321

310

Signal of the
reference line

| 333 |
| Subtraction unit |

Variable weight
coefficient filter

Adder

Output
signal

332

Filtering unit

Weight
coefficient

Weight coefficient
updating unit

322

331

Demodulation
unit

Correlation
error

Reference noise
signal processing unit

Correlation error
detection unit

323

330

Weight coefficient
processing unit

320

FIG. 3

Diverting the reference noise signal input from the reference line into two branches and filtering the first branch of the reference noise signal by using a weight coefficient as a transfer function — 401

Superposing the filtered signal with the signal received by the present line, diverting the superposed signal into two branches and outputting the superposed signal of the first branch as a processed signal — 402

Calculating the correlation error between the superposed signal of the second branch and the reference noise signal of the second branch — 403

Updating the weight coefficient in accordance with the obtained correlation error — 404

**FIG. 4**

**EP 2 001 136 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006039454 A1
- US 2004090927 A1